# EUROPEAN PATENT APPLICATION

(11) **EP 4 593 187 A1**
(43) Date of publication of application: **30.07.2025**
(21) Application number: 25150315.7
(22) Date of filing: 06.01.2025
(51) Int. Cl.: H01M 50/474, H01M 50/477, H01M 50/595, H01M 10/0525, H01M 10/0587

(54) **ELECTRODE ASSEMBLY FOR RECHARGEABLE BATTERY**

(30) Priority: 29.01.2024 KR 20240013291
(71) Applicant: SAMSUNG SDI CO., LTD., Yongin-si, Gyeonggi-do 17084 (KR)
(72) Inventor: LEE, Sungjun, 17084 Yongin-si (KR); KIM, Kyoungtae, 17084 Yongin-si (KR); KIM, Soyeon, 17084 Yongin-si (KR); KIM, Junghyun, 17084 Yongin-si (KR); PARK, Yeonjin, 17084 Yongin-si (KR); PARK, Junghyun, 17084 Yongin-si (KR); LEE, Jungsu, Yongin-si 17084 (KR); CHO, Youngjae, 17084 Yongin-si (KR); KIM, Joungku, 17084 Yongin-si (KR); KIM, Dokyung, 17084 Yongin-si (KR)
(74) Representative: Marks & Clerk LLP

(57) **Abstract**

An electrode assembly of a rechargeable battery includes a positive electrode plate, a negative electrode plate, and a separator positioned between the electrode plates. Each of the electrode plates includes an electrode substrate, a first active material layer formed on a first surface of the electrode substrate, a second active material layer formed on a second surface of the electrode substrate, a first lamination tape attached to an end portion of the first active material layer, and a second lamination tape attached to an end portion of the second active material layer. The first lamination tape and the second lamination tape each include a protruding portion that protrudes beyond an end of the electrode substrate.

## Description

### BACKGROUND

### (a) Field

The present disclosure relates to an electrode assembly for a rechargeable battery, and more specifically, to an electrode assembly for a rechargeable battery having a lamination tape at an end portion of an electrode substrate.

### (b) Description of the Related Art

A rechargeable battery is a battery that, unlike a primary battery, repeatedly performs charging and discharging. A small-capacity rechargeable battery is used in a portable small electronic device such as a mobile phone, a laptop computer, or a camcorder. A large-capacity and high-density rechargeable battery is used, for example, as a power source for driving a motor of a hybrid vehicle or an electric vehicle or an energy storage device of the hybrid vehicle or the electric vehicle.

A rechargeable battery includes an electrode assembly for charging and discharging a current, a case or a pouch for accommodating the electrode assembly and an electrolyte, and an electrode terminal connected to the electrode assembly to draw current from the electrode assembly out to outside of the case or the pouch.

The electrode assembly may be a jelly roll type formed by winding an electrode plate and a separator. The winding process produces a jelly roll by winding a negative electrode substrate, a positive electrode substrate, and a separator as part of a process that produces a cylindrical rechargeable battery.

If contact between the negative electrode substrate and the positive electrode substrate occurs in the rechargeable battery, there is a possibility of a short circuit or ignition. Therefore, to prevent such contact between the positive electrode substrate and the negative electrode substrate, the substrate is cut and then a lamination tape is attached to an end portion of the cut substrate. Attachment of the lamination tape is included in the winding process of the rechargeable battery.

In the lamination tape process, the lamination tape is attached to a front portion and an end portion of the jelly roll, and then the lamination tape is cut to form one pattern. The lamination tape prevents a short circuit from occurring due to deformation of a front portion of the positive electrode.

### SUMMARY OF THE DISCLOSURE

Embodiments of the present disclosure provide an electrode assembly of a rechargeable battery that prevents a short circuit due to deformation of a positive electrode substrate and a negative electrode substrate.

Embodiments of the present disclosure provide an electrode assembly of a rechargeable battery that prevent cracks in positive and negative electrode substrates that may be caused by an adhesive layer of a lamination tape. Embodiments of the present disclosure provide an electrode assembly of a rechargeable battery that extends a lifespan of a cutting unit (or a cutting device) that cuts a lamination tape by minimizing an adhesive layer of the lamination tape.

An electrode assembly for a rechargeable battery may include a positive electrode, a negative electrode, and a separator positioned between the positive electrode plate and the negative electrode plate. The positive electrode plate, the negative electrode plate, and the separator are formed as a wound structure. Each of the positive and negative electrode plates may include an electrode substrate, a first active material layer formed on a first surface of the electrode substrate, a second active material layer formed on a second surface of the electrode substrate, a first lamination tape attached to an end portion of the first active material layer, the first lamination tape including a portion protruding beyond an end of the electrode substrate, and a second lamination tape attached to an end portion of the second active material layer, the second lamination tape including a portion protruding beyond the end of the electrode substrate.

The first lamination tape includes a first non-adhesive portion and the second lamination tape includes a second non-adhesive portion, and the first non-adhesive portion and the second non-adhesive portion are separated from each other outside cross-sections of the first active material layer and the second active material layer.

The first non-adhesive portion may be cut by a knife in a process that forms two electrode plates.

The electrode substrate, the first active material layer, and the second active material layer may form a cross-section for the positive electrode plate and the negative electrode plate.

A first adhesive layer of the first lamination tape and a second adhesive layer of the second lamination tape may form a main adhesive portion above the first active material layer and below the second active material layer, the first adhesive layer and the second adhesive layer form an outer adhesive portion beyond the first active material layer and the second active material layer, and the first adhesive layer and the second adhesive layer are attached to each other in the outer adhesive portion.

The first lamination tape and the second lamination tape may form non-adhesive portions that are separated from each other beyond the outer adhesive portion.

The first lamination tape and the second lamination tape may form non-adhesive portions that are separated from each other above the first active material layer and below the second active material layer.

The electrode substrate may extend farther than the first active material layer and the second active material layer.

The first active material layer may be formed on the first surface of the electrode substrate, the second active material layer may be formed on the second surface of the electrode substrate, a first cross-section of the first active material layer and a second cross-section of the second active material layer may be disposed at positions that are not aligned, the first lamination tape may be attached to the first surface of the electrode substrate by a first adhesive layer, and the second lamination tape may be attached to the second surface of the electrode substrate by a second adhesive layer.

The first lamination tape and the second lamination tape may further include non-adhesive portions that are separated from each other outside a cross-section of the electrode substrate.

The first lamination tape and the second lamination tape may form non-adhesive portions that are separated from each other on the first active material layer and the second active material layer therebetween.

According to embodiments of the present disclosure, first and second lamination tapes may include a protruding portion protruding beyond an end of an electrode substrate such that a short circuit caused by deformation of a positive electrode substrate and a negative electrode substrate is prevented.

In the embodiments, the first and second lamination tapes may further include non-adhesive portions separated from each other outside cross-sections of the first active material layer and the second active material layer such that cracks in the positive electrode substrate and the negative electrode substrate due to adhesive layers of the first and second lamination tapes are prevented.

According to the embodiments, a lifespan of a knife for cutting the lamination tape may be extended due to minimization of the adhesive layer of each of the first and second lamination tapes.

At least some of the above and other features of the invention are set out in the claims.

### BRIEF DESCRIPTION OF THE DRAWINGS

FIG. 1 is a perspective view of an electrode assembly of a rechargeable battery according to a first embodiment of the present disclosure.
FIG. 2 is a cross-sectional view of a state before an electrode plate of FIG. 1 is cut.
FIG. 3 is a cross-sectional view of a process of attaching and cutting first and second lamination tapes to the electrode plate.
FIG. 4 is a cross-sectional view of a state where the first and second lamination tapes are cut in FIG. 3.
FIG. 5 is a cross-sectional view showing a state where first and second lamination tapes attached to an electrode plate are applied to an electrode assembly of a rechargeable battery according to a second embodiment of the present disclosure are cut.
FIG. 6 is a cross-sectional view of a process of attaching and cutting first and second lamination tapes to an electrode plate applied to an electrode assembly of a rechargeable battery according to a third embodiment of the present disclosure.
FIG. 7 is a cross-sectional view of a state where the first and second lamination tapes are cut in FIG. 6.
FIG. 8 is a perspective view of an electrode assembly of a rechargeable battery according to a fourth embodiment of the present disclosure.
FIG. 9 is a partial cross-sectional view of the electrode assembly of FIG. 8.
FIG. 10 is a partial cross-sectional view of an electrode assembly of a rechargeable battery according to a fifth embodiment of the present disclosure.
FIG. 11 is a partial cross-sectional view of an electrode assembly of a rechargeable battery according to a sixth embodiment of the present disclosure.
FIG. 12 is a partial cross-sectional view of an electrode assembly of a rechargeable battery according to a seventh embodiment of the present disclosure.
FIG. 13 is a partial cross-sectional view of an electrode assembly of a rechargeable battery according to an eighth embodiment of the present disclosure.
FIG. 14 is a partial cross-sectional view of an electrode assembly of a rechargeable battery according to a ninth embodiment of the present disclosure.

### DETAILED DESCRIPTION OF THE EMBODIMENTS

Embodiments of the present disclosure will be described more fully hereinafter with reference to the accompanying drawings so that those skilled in the art easily implement the embodiments. The present disclosure may be modified in various different ways, all without departing from the scope of the present disclosure. In order to clearly describe the present disclosure, parts or portions that are irrelevant to the description are omitted, and identical or similar constituent elements throughout the specification are denoted by the same reference numerals.

### Electrode assembly with A type

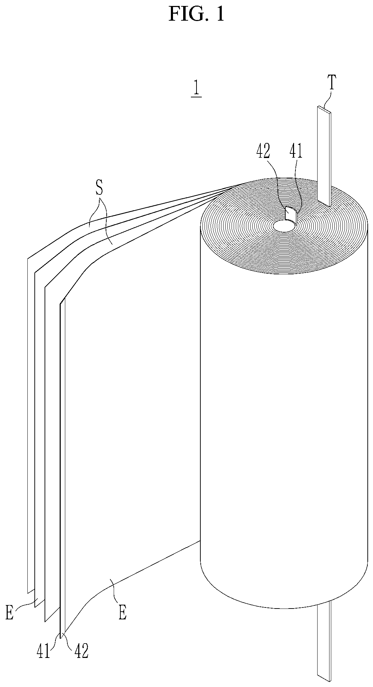

FIG. 1 is a perspective view of an electrode assembly of a rechargeable battery according to a first embodiment of the present disclosure. Referring to FIG. 1, the electrode assembly 1 of the rechargeable battery of the first embodiment may be configured to charge and discharge, and may be formed in a jelly roll type by stacking and winding two separators S and electrode plates E of a negative electrode and a positive electrode.

Although not shown separately in the drawings, the electrode assembly may be embedded in a case together with an electrolyte, an opening of the case may be sealed with a cap plate, and an electrode terminal may be drawn to outside of the cap plate to form the rechargeable battery.

As an example, the electrode plate E may form the positive electrode by coating a positive electrode active material on both surfaces of an electrode substrate 10 formed of an aluminum (Al) foil, or may form the negative electrode by coating a negative electrode active material on the electrode substrate 10 formed of a copper (Cu) foil.

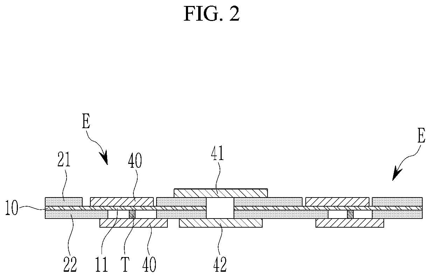

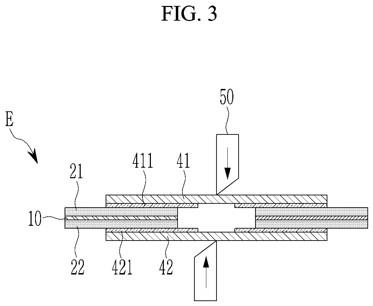

FIG. 2 is a cross-sectional view of a state before the electrode plate of FIG. 1 is cut, and FIG. 3 is a cross-sectional view of a process of attaching and cutting first and second lamination tapes to the electrode plate.

Referring to FIGS. 1 to 3, the electrode plate E may include a first active material layer 21 and a second active material layer 22 such that an active material is applied on both surfaces of the electrode substrate 10 formed of a thin metal plate. The electrode substrate 10 may include a first surface disposed to face outside in a diameter direction when the electrode substrate 10 is in the wound state and a second surface disposed to face inside in the diameter direction in the wound state. The first active material layer 21 may be formed on the first surface, and the second active material layer 22 may be formed on the second surface.

In some embodiments, the electrode plate E may include the first and second active material layers 21 and 22 and an uncoated portion 11 where the electrode substrate 10 is exposed because an active material is not applied. The uncoated portion 11 of the electrode plate E may be formed at a start portion and an end portion of the winding direction of the electrode assembly and a middle of the start portion and the end portion. But in the first embodiment, the uncoated portion 11 of the electrode plate E may be formed at a center of the start portion and the end portion.

Tabs T of the negative electrode and the positive electrode may be connected to the uncoated portion 11 of the electrode substrate 10. The tabs T of the negative electrode and the positive electrode may be drawn out to at least one of ends of the electrode assembly in the direction of the winding axis. In the present embodiment, the tabs T of the negative electrode and the positive electrode may be drawn out at both ends of the winding axis direction. The uncoated portion 11 and the tab T may be insulated with a lamination tape 40.

The electrode plate E may include a first lamination tape 41 and a second lamination tape 42 attached to a start portion and an end portion of the winding direction. For example, the first lamination tape 41 may be attached to an end portion of the first active material layer 21 by a first adhesive layer 411 (see FIG. 3). The second lamination tape 42 may be attached to an end portion of the second active material layer 22 by a second adhesive layer 421.

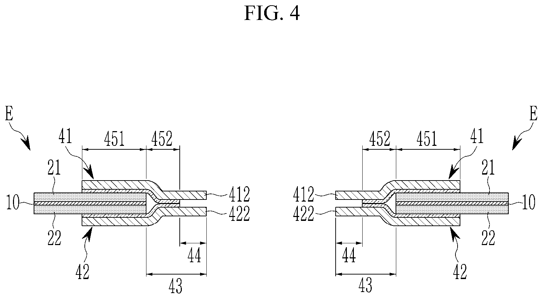

FIG. 4 is a cross-sectional view of a state where the first and second lamination tapes are cut as shown in FIG. 3. Referring to FIG. 4, the first lamination tape 41 and the second lamination tape 42 may be attached to each other outside cross-sections of the first and second active material layers 21 and 22 and the electrode substrate 10. The first and second lamination tapes 41 and 42 that are attached to each other may include a protruding portion 43 (or 412 and 422) that protrudes from an end portion of the electrode substrate 10. The protruding portion 43 (or 412 and 422) of the first and second lamination tapes 41 and 42 may prevent a short circuit due to deformation of the electrode substrate 10.

In some embodiments, the first and second lamination tapes 41 and 42 may further include first non-adhesive portions 44 that are separated from each other outside cross-sections of the first active material layer 21 and the second active material layer 22. The first non-adhesive portions 44 of the first and second lamination tapes 41 and 42 may prevent a short circuit caused by deformation of the electrode substrate 10 due to the first and second adhesive layers 411 and 421.

The first non-adhesive portions 44 may be cut by knives 50 to thereby form two different electrode plates E. Two electrode plates E may be manufactured through a single cutting process, and the first non-adhesive portion 44 may be provided at one side of each electrode plate E.

In the first embodiment, the electrode substrate 10, the first active material layer 21, and the second active material layer 22 may form a cross-section at the same position. The first adhesive layer 411 of the first lamination tape 41 and the second adhesive layer 421 of the second lamination tape 42 may form a main adhesive portion 451 above the first active material layer 21 and the second active material layer 22 and may further form an outer adhesive portion 452 outside cross-sections of the first active material layer 21 and the second active material layer 22 (which are attached to each other with the main adhesive portion 451).

The first non-adhesive portions 44 formed by the first lamination tape 41 and the second lamination tape 42 may be formed separately from each other outside the outer adhesive portion 452. The first and second adhesive layers 411 and 421 may be minimized due to the first non-adhesive portions 44 of the first and second lamination tapes 41 and 42, so that lifespans of the knives 50 cutting the first and second lamination tapes 41 and 42 are extended.

Hereinafter, various modified examples and embodiments of the present disclosure will be described. Descriptions of configurations that are the same as the first embodiment will be omitted, and descriptions of configurations that are different from the first embodiment will be provided.

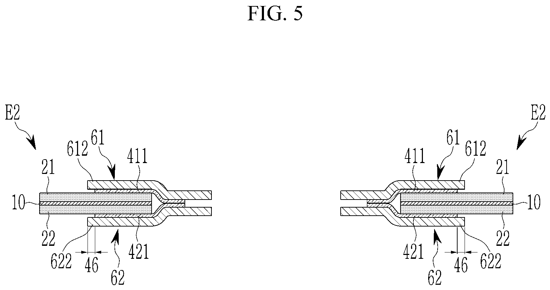

FIG. 5 is a cross-sectional view showing a state where first and second lamination tapes attached to an electrode plate applied to an electrode assembly of a rechargeable battery according to a second embodiment of the present disclosure are cut. Referring to FIG. 5, in the electrode plate E2 of the electrode assembly of the rechargeable battery according to the second embodiment, the first lamination tape 61, and the second lamination tape 62 may form second non-adhesive portions 46 (or 612 and 622) that are separated from above and below the first active material layer 21 and the second active material layer 22.

The second non-adhesive portions 46 (or 612 and 622) of the first and second lamination tapes 61 and 62 may prevent cracks from occurring at ends of the first and second lamination tapes 61 and 62 if the rechargeable battery is charged and discharged. For example, the electrode plate E2 may be thickened due to the first and second adhesive layers 411 and 421 so that internal stress is generated at a start portion and an end portion of the electrode plate E2 when the electrode plate is wound. Thus, a crack may occur. In particular, the first and second adhesive layers 411 and 421 may be fixed to the electrode plate E2 such that there is interference with flows of the first and second active material layers 21 and 22, and, thus, the crack may occur. However, the second non-adhesive portions 46 (or 612 and 622) where the first and second adhesive layers 411 and 421 are not present may reduce internal stress at ends of the first and second lamination tapes 61 and 62, and may enable a flow between the second non-adhesive portions 46 (or 612 and 622) and the first and second active material layers 21 and 22. Thus, the active material may not be dragged, and the occurrence of a crack may be prevented.

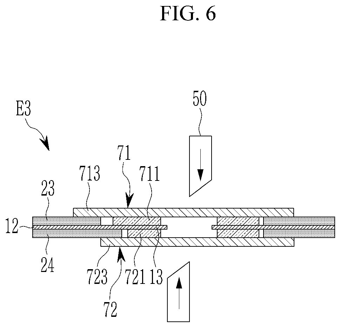

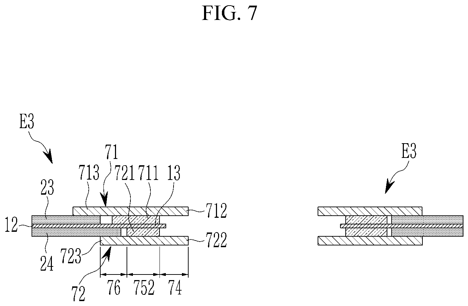

FIG. 6 is a cross-sectional view of a process of attaching and cutting first and second lamination tapes to an electrode plate applied to an electrode assembly of a rechargeable battery according to a third embodiment of the present disclosure, and FIG. 7 is a cross-sectional view of a state where the first and second lamination tapes that are cut in FIG. 6.

Referring to FIG. 6 and FIG. 7, in the electrode plate E3 of the electrode assembly of the rechargeable battery according to the third embodiment, an electrode substrate 12 may form a cross-section that extends farther than cross-sections of a first active material layer 23 and a second active material layer 24. For example, the electrode substrate 12 may form an uncoated portion 13 at a distance from the ends of the first active material layer 23 and the second active material layer 24.

The first active material layer 23 may be formed on a first surface of the electrode substrate 12 (for example, a first surface of the uncoated portion 13), and the second active material layer 24 may be formed on a second surface of the electrode substrate 12 (for example, a second surface of the uncoated portion 13). A first cross-section of the first active material layer 23 and a second cross-section of the second active material layer 24 may be disposed at positions that are misaligned. For example, the uncoated portion 13 may be formed shorter on the second surface than on the first surface.

A first lamination tape 71 may be attached to the first surface of the electrode substrate 12 by a first adhesive layer 711, and a second lamination tape 72 may be attached to the second surface of the electrode substrate 12 by a second adhesive layer 721.

In some embodiments, the first and second lamination tapes 71 and 72 may include third non-adhesive portions 74 (or 712 and 722) that are separated from each other outside cross-sections of the first active material layer 23 and the second active material layer 24. The third non-adhesive portions 74 (or 712 and 722) of the first and second lamination tapes 71 and 72 may prevent a crack defect from forming in the electrode substrate 12 due to the first and second adhesive layers 711 and 721.

The third non-adhesive portions 74 (or 712 and 722) may be cut by knives 50 to form two different electrode plates E3. The two electrode plates E3 may be manufactured through a single cutting process, and the third non-adhesive portions 74 (or 712 and 722) may be provided at one side of each electrode plate E3.

The third non-adhesive portions 74 (or 712 and 722) formed by the first lamination tape 71 and the second lamination tape 72 may be separated from each other outside an adhesive portion 752. The adhesive portion 752 may be different relative to cross-section positions of the first and second active material layers 23 and 24 in the first and second adhesive layers 711 and 721, but the difference may not be distinguishable in the present disclosure.

The first and second adhesive layers 711 and 721 may be minimized due to the third non-adhesive portions 74 (or 712 and 722) of the first and second lamination tapes 71 and 72, so that lifespans of the knives 50 cutting the first and second lamination tapes 71 and 72 are extended.

The first lamination tape 71 and the second lamination tape 72 may form fourth non-adhesive portions 76 (or 713 and 723) that are separated from each other on the first active material layer 23 and the second active material layer 24. The fourth non-adhesive portions 76 (or 713 and 723) of the first and second lamination tapes 71 and 72 may reduce thicknesses of a start portion and an end portion of the electrode plate so that a curvature of the electrode plate is reduced when the electrode plate is wound. Thus, occurrence of a crack may be reduced. That is, the fourth non-adhesive portions 76 (or 713 and 723) of the first and second lamination tapes 71 and 72 may prevent cracks from occurring at ends of the first and second lamination tapes 71 and 72 if the rechargeable battery is charged and discharged. For example, the electrode plate E3 may be thickened due to the first and second adhesive layers 711 and 721 so that internal stress is generated at a start portion and an end portion of the electrode plate E3 when the electrode plate is wound. Thus, a crack may occur. And the first and second adhesive layers 711 and 721 may fix the electrode plate E2 to interfere with flows of the first and second active material layers 23 and 24 so that the crack may occur. However, the fourth non-adhesive portions 76 (or 713 and 723) from which the first and second adhesive layers 711 and 721 are removed may reduce internal stress at ends of the first and second lamination tapes 71 and 72, and may enable a relative flow between the fourth non-adhesive portions 76 (or 713 and 723) and the first and second active material layers 23 and 24. Thus, the active material may not be dragged, so that occurrence of the crack is prevented.

### Electrode assembly with B type

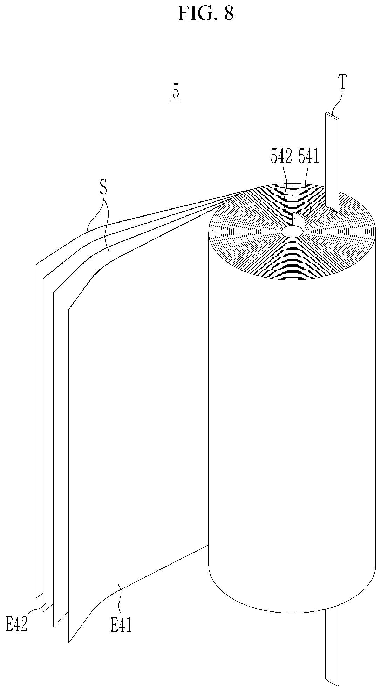

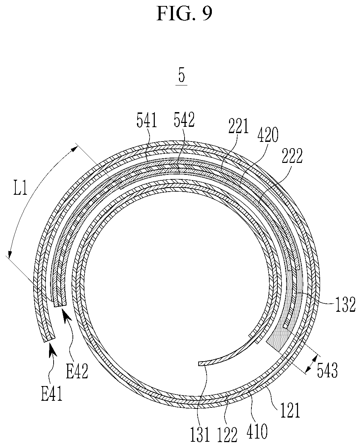

FIG. 8 is a perspective view of an electrode assembly of a rechargeable battery according to a fourth embodiment of the present disclosure, and FIG. 9 is a partial cross-sectional view of the electrode assembly of FIG. 8. Referring to FIG. 8 and FIG. 9, the electrode assembly 5 of the rechargeable battery of the fourth embodiment may be configured to charge and discharge, and may be formed in a jelly roll type by stacking and winding two separators S and electrode plates of a negative electrode E41 and a positive electrode E42. For convenience, the separator S is omitted in FIG. 9.

Although not shown separately in the drawings, the electrode assembly may be embedded in a case together with an electrolyte, an opening of the case may be sealed with a cap plate, and an electrode terminal may be drawn out to the outside of the cap plate to form the rechargeable battery.

A positive electrode active material may be coated on both surfaces of an electrode substrate 420 formed of an aluminum (Al) foil to form the electrode plate of the positive electrode E42. A negative electrode active material may be coated on an electrode substrate 410 formed of a copper (Cu) foil to form the electrode plate of the negative electrode E41.

The electrode plates of the negative electrode E41 and the positive electrode E42 may include first active material layers 121 and 221 and second active material layers 122 and 222 in which an active material is applied on both surfaces of the electrode substrates 410 and 420 that are formed of thin metal plates. In the negative electrode E41 and the positive electrode E42, the electrode substrates 410 and 420 may include a first surface disposed to face outside in a diameter direction when the electrode assembly is in the wound state and a second surface disposed to face inside in the diameter direction in the wound state. The first active material layers 121 and 221 may be formed on the first surface, and the second active material layers 122 and 222 may be formed on the second surface.

In some embodiments, the electrode plates of the negative electrode E41 and the positive electrode E42 may include the first active material layers 121 and 221, the second active material layers 122 and 222, and uncoated portions 131 and 132 where the electrode substrates 410 and 420 are exposed because an active material is not applied. The uncoated portions 131 and 132 of the negative electrode E41 and the positive electrode E42 may be formed at a start portion and an end portion in the winding direction of the electrode assembly and a middle of the start portion and the end portion. But in the fourth embodiment, the uncoated portions 131 and 132 of the negative electrode E41 and the positive electrode E42 may be formed at the start portion of the winding direction of the electrode assembly.

In the fourth embodiment, the electrode plate of the positive electrode E42 may include a first lamination tape 541 and a second lamination tape 542 attached to the start portion of the winding direction. The first lamination tape 541 may be attached to a first surface of the uncoated portion 132 at an end portion of the first active material layer 221. The second lamination tape 542 may be attached to a second surface of the uncoated portion 132 at an end portion of the second active material layer 222.

The first and second lamination tapes 541 and 542 attached to the first and second surfaces of the uncoated portion 132 may prevent a short circuit due to deformation of the electrode substrates 410 and 420 of the negative electrode E41 and the positive electrode E42.

The first lamination tape 541 may form a first attachment portion (or an outer layer portion) disposed on the first active material layer 221 at a winding central portion of the electrode assembly 5, and the second lamination tape 542 may form a second attachment portion (or an inner layer portion) disposed on the second active material layer 222.

An end of the first attachment portion of the first lamination tape 541 on the first active material layer 221 and an end of the second attachment portion of the second lamination tape 542 on the second active material layer 222 may be spaced apart from each other in the winding direction. In particular, the first attachment portion may be longer than the second attachment portion by a first length L1. The first length L1 may minimize a thickness difference in a winding diameter direction due to the first and second lamination tapes 541 and 542 such that, after the winding, the first length L1 prevents a crack from occurring in the first and second active material layers 221 and 222 of the electrode assembly 5.

The first lamination tape 541 and the second lamination tape 542 may be attached to the first and second surfaces of the uncoated portion 132, respectively, and may include first extension attachment portions 543 that further extend from an end portion of the uncoated portion 132 and are attached to each other. The first extension attachment portion 543 may further prevent a short circuit due to deformation of the electrode substrates 410 and 420 of the negative electrode E41 and the positive electrode E42. The first extension attachment portion 543 may not correspond to an end portion of the first active material layer 121 of the negative electrode E41 to prevent a crack from occurring in the first active material layer 121 that may be caused by the first extension attachment portion 543.

In some embodiments, the first extension attachment portion 543 may be disposed at an opposite side in a diameter direction of the electrode assembly 5 to correspond to the first length L1. Thus, the first extension attachment portion 543 may further prevent occurrence of the crack due to the thickness difference.

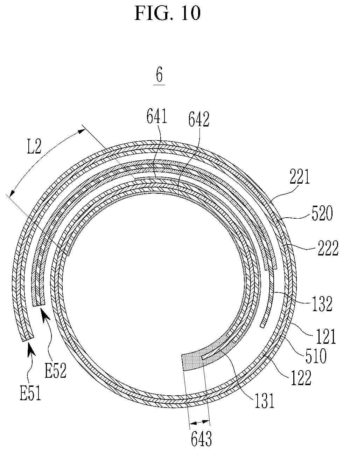

FIG. 10 is a partial cross-sectional view of an electrode assembly of a rechargeable battery according to a fifth embodiment of the present disclosure. Referring to FIG. 10, in the electrode assembly 6 of the rechargeable battery of the fifth embodiment, an electrode plate of a negative electrode E51 may include a first lamination tape 641 and a second lamination tape 642 attached to a start portion of the winding direction. The first lamination tape 641 may be attached to a first surface of an uncoated portion 131 at an end portion of a first active material layer 121. The second lamination tape 642 may be attached to a second surface of the uncoated portion 131 at an end portion of a second active material layer 122.

The first and second lamination tapes 641 and 642 attached to the first and second surfaces of the uncoated portion 131 may prevent a short circuit due to deformation of electrode substrates 510 and 520 of the negative electrode E51 and a positive electrode E52.

The first lamination tape 641 may form a first attachment portion (or an outer layer portion) disposed on the first active material layer 121 at a winding central portion of the electrode assembly 6, and the second lamination tape 642 may form a second attachment portion (or an inner layer portion) disposed on the second active material layer 122.

An end of the first attachment portion of the first lamination tape 641 on the first active material layer 121 and an end of the second attachment portion of the second lamination tape 642 on the second active material layer 122 may be spaced apart from each other in the winding direction. The first attachment portion may be shorter than the second attachment portion by a second length L2.

The second length L2 may minimize a thickness difference in a winding diameter direction due to the first and second lamination tapes 641 and 642 such that, after the winding, the second length L2 prevents a crack from occurring in the first and second active material layers 221 and 222 of the electrode assembly 6.

The first lamination tape 641 and the second lamination tape 642 may be attached to the first and second surfaces of the uncoated portion 131, respectively. The first lamination tape 641 and the second lamination tape 642 may include second extension attachment portions 643 that further extend from an end portion of the uncoated portion 131 and are attached to each other. The second extension attachment portions 643 may further prevent a short circuit due to deformation of the electrode substrates 510 and 520 of the negative electrode E51 and the positive electrode E52.

In some embodiments, the second extension attachment portion 643 may be disposed at an opposite side in a diameter direction of the electrode assembly 6 to correspond to the second length L2. Thus, the second extension attachment portion 643 may further prevent occurrence of the crack due to the thickness difference.

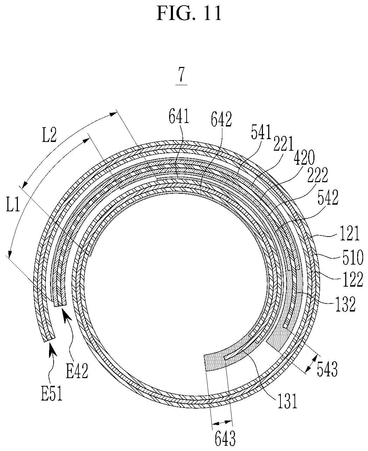

FIG. 11 is a partial cross-sectional view of an electrode assembly of a rechargeable battery according to a sixth embodiment of the present disclosure. Referring to FIG. 11, in the electrode assembly 7 of the rechargeable battery of the sixth embodiment, an electrode plate of a positive electrode E42 may include a first lamination tape 541 and a second lamination tape 542 attached to a start portion of the winding direction. The first lamination tape 541 may be attached to a first surface of an uncoated portion 132 at an end portion of a first active material layer 221. The second lamination tape 542 may be attached to a second surface of the uncoated portion 132 at an end portion of a second active material layer 222. The first and second lamination tapes 541 and 542 attached to the first and second surfaces of the uncoated portion 132 may prevent a short circuit due to deformation of electrode substrates 510 and 420 of a negative electrode E51 and a positive electrode E42.

The first lamination tape 541 may form a first attachment portion (or an outer layer portion) disposed on the first active material layer 221 at a winding central portion of the electrode assembly 7, and the second lamination tape 542 may form a second attachment portion (or an inner layer portion) disposed on the second active material layer 222.

An end of the first attachment portion of the first lamination tape 541 on the first active material layer 221 and an end of the second attachment portion of the second lamination tape 542 on the second active material layer 222 may be spaced apart from each other in the winding direction. The first attachment portion may be longer than the second attachment portion by a first length L1. The first length L1 may minimize a thickness difference in a winding diameter direction due to the first and second lamination tapes 541 and 542 such that, after the winding, the first length L1 prevents a crack from occurring in the first and second active material layers 221 and 222 of the electrode assembly 7.

The first lamination tape 541 and the second lamination tape 542 may be attached to the first and second surfaces of the uncoated portion 132, respectively. The first lamination tape 541 and the second lamination tape 542 may include first extension attachment portions 543 that extend from an end portion of the uncoated portion 132 and are attached to each other. The first extension attachment portions 543 may further prevent a short circuit due to deformation of the electrode substrates 510 and 420 of the negative electrode E51 and the positive electrode E42. The first extension attachment portions 543 may not correspond to an end portion of a first active material layer 121 of the negative electrode E51 to prevent a crack from occurring in the first active material layer 121 that may be caused by the first extension attachment portions 543.

In some embodiments, the first extension attachment portions 543 may be disposed at an opposite side in a diameter direction of the electrode assembly 7 to correspond to the first length L1. Thus, the first extension attachment portions 543 may further prevent occurrence of the crack due to the thickness difference.

An electrode plate of the negative electrode E51 may include a first lamination tape 641 and a second lamination tape 642 attached to a start portion of a winding direction. The first lamination tape 641 may be attached to a first surface of an uncoated portion 131 at an end portion of the first active material layer 121. The second lamination tape 642 may be attached to a second surface of the uncoated portion 131 at an end portion of a second active material layer 122. The first and second lamination tapes 641 and 642 attached to the first and second surfaces of the uncoated portion 131 may prevent a short circuit due to deformation of the electrode substrates 510 and 420 of the negative electrode E51 and the positive electrode E42.

The first lamination tape 641 may form a first attachment portion (or an outer layer portion) disposed on the first active material layer 121 at a winding central portion of the electrode assembly 7. The second lamination tape 642 may form a second attachment portion (or an inner layer portion) disposed on the second active material layer 122.

An end of the first attachment portion of the first lamination tape 641 on the first active material layer 121 and an end of the second attachment portion of the second lamination tape 642 on the second active material layer 122 may be spaced apart from each other in the winding direction. The first attachment portion may be longer than the second attachment portion by a second length L2. The second length L2 may minimize a thickness difference in a winding diameter direction due to the first and second lamination tapes 641 and 642 such that, after the winding, the second length L2 prevents a crack from occurring in the first and second active material layers 221 and 222 of the electrode assembly 7.

The first lamination tape 641 and the second lamination tape 642 may be attached to the first and second surfaces of the uncoated portion 131, respectively. The first lamination tape 641 and the second lamination tape 642 may include second extension attachment portions 643 that further extend from an end portion of the uncoated portion 131 and are attached to each other. The second extension attachment portions 643 may further prevent a short circuit due to deformation of the electrode substrates 510 and 420 of the negative electrode E51 and the positive electrode E42. The second extension attachment portions 643 may be disposed at an opposite side in a diameter direction of the electrode assembly 7 to correspond to the second length L2. Thus, the second extension attachment portions 643 may further prevent occurrence of the crack due to the thickness difference.

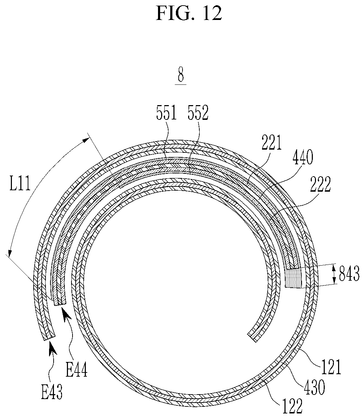

FIG. 12 is a partial cross-sectional view of an electrode assembly of a rechargeable battery according to a seventh embodiment of the present disclosure. Referring to FIG. 12, in the electrode assembly 8 of the rechargeable battery of the seventh embodiment, an electrode plate of a positive electrode E44 may include a first lamination tape 551 and a second lamination tape 552 attached to a start portion of a winding direction.

The first lamination tape 551 may be attached to a first active material layer 221 and may extend from an end portion of the first active material layer 221. The second lamination tape 552 may be attached to a second active material layer 222 and further extend from an end portion of the second active material layer 222. The extensions of the first and second lamination tapes 551 and 552 may include first extension attachment portions 843 that are attached to each other. The first extension attachment portions 843 of the first and second lamination tapes 551 and 552 attached to the first and second active material layers 221 and 222 may prevent a short circuit due to deformation of electrode substrates 430 and 440 of the negative electrode E43 and the positive electrode E44.

The first lamination tape 551 may form a first attachment portion (or an outer layer portion) disposed on the first active material layer 221 at a winding central portion of the electrode assembly 8. The second lamination tape 552 may form a second attachment portion (or an inner layer portion) disposed on the second active material layer 222.

An end of the first attachment portion of the first lamination tape 551 on the first active material layer 221 and an end of the second attachment portion of the second lamination tape 552 on the second active material layer 222 may be spaced apart from each other in the winding direction. The first attachment portion may be longer than the second attachment portion by an eleventh length L11. The eleventh length L11 may minimize a thickness difference in a winding diameter direction due to the first and second lamination tapes 551 and 552 such that, after the winding, the eleventh length L11 prevents a crack from occurring in the first and second active material layers 221 and 222 of the electrode assembly 8.

The first extension attachment portion 843 may be disposed at an opposite side in a diameter direction of the electrode assembly 8 to partially correspond to the eleventh length L11. Thus, the first extension attachment portion 843 may further prevent occurrence of the crack due to a thickness difference.

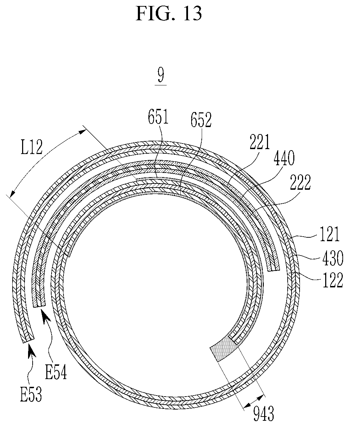

FIG. 13 is a partial cross-sectional view of an electrode assembly of a rechargeable battery according to an eighth embodiment of the present disclosure. Referring to FIG. 13, in the electrode assembly 9 of the rechargeable battery of the eighth embodiment, an electrode plate of a negative electrode E53 may include a first lamination tape 651 and a second lamination tape 652 attached to a start portion of a winding direction.

The first lamination tape 651 may be attached to a first active material layer 121 and may extend from an end portion of the first active material layer 121. The second lamination tape 652 may be attached to a second active material layer 122 and may extend from an end portion of the second active material layer 122. The extensions of the first and second lamination tapes 651 and 652 may include second extension attachment portions 943 that are attached to each other. The second extension attachment portions 943 of the first and second lamination tapes 651 and 652 attached to the first and second active material layers 121 and 122 may prevent a short circuit due to deformation of electrode substrates 430 and 440 of the negative electrode E53 and a positive electrode E54.

The first lamination tape 651 may form a first attachment portion (or an outer layer portion) disposed on the first active material layer 121 at a winding central portion of the electrode assembly 9. The second lamination tape 652 may form a second attachment portion (or an inner layer portion) disposed on the second active material layer 122. An end of the first attachment portion of the first lamination tape 651 on the first active material layer 121 and an end of the second attachment portion of the second lamination tape 652 on the second active material layer 122 may be spaced apart from each other in the winding direction. The first attachment portion may be shorter than the second attachment portion by a twelfth length L12. The twelfth length L12 may minimize a thickness difference in a winding diameter direction due to the first and second lamination tapes 651 and 652 such that, after the winding, the twelfth length L12 prevents a crack from occurring in the first and second active material layers 121 and 122 of the electrode assembly 9.

In some embodiments, the second extension attachment portion 943 may be disposed at an opposite side in a diameter direction of the electrode assembly 9 to partially correspond to the twelfth length L12. Thus, the second extension attachment portion 943 may further prevent occurrence of the crack due to a thickness difference.

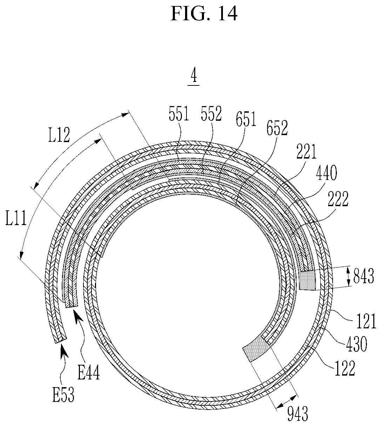

FIG. 14 is a partial cross-sectional view of an electrode assembly of a rechargeable battery according to a ninth embodiment of the present disclosure. Referring to FIG. 14, in the electrode assembly 4 of the rechargeable battery of the ninth embodiment, an electrode plate of a positive electrode E44 may include a first lamination tape 551 and a second lamination tape 552 attached to a start portion of a winding direction.

The first lamination tape 551 may be attached to a first active material layer 221 and may extend from an end portion of the first active material layer 221. The second lamination tape 552 may be attached to a second active material layer 222 and may extend from an end portion of the second active material layer 222. The extensions of the first and second lamination tapes 551 and 552 may include first extension attachment portions 843 that are attached to each other.

The first extension attachment portions 843 of the first and second lamination tapes 551 and 552 attached to the first and second active material layers 221 and 222 may prevent a short circuit due to deformation of electrode substrates 430 and 440 of a negative electrode E53 and the positive electrode E44.

The first lamination tape 551 may form a first attachment portion (or an outer layer portion) disposed on the first active material layer 221 at a winding central portion of the electrode assembly 4. The second lamination tape 552 may form a second attachment portion (or an inner layer portion) disposed on the second active material layer 222.

An end of the first attachment portion of the first lamination tape 551 on the first active material layer 221 and an end of the second attachment portion of the second lamination tape 552 on the second active material layer 222 may be spaced apart from each other in the winding direction. The first attachment portion may be longer than the second attachment portion by an eleventh length L11. The eleventh length L11 may minimize a thickness difference in a winding diameter direction due to the first and second lamination tapes 551 and 552 such that, after the winding, the eleventh length L11 prevents a crack from occurring in the first and second active material layers 221 and 222 of the electrode assembly 4.

The first extension attachment portion 843 may be disposed at an opposite side in a diameter direction of the electrode assembly 4 to partially correspond to the eleventh length L11. Thus, the first extension attachment portion 843 may further prevent occurrence of the crack due to the thickness difference.

In the electrode assembly 4 of the rechargeable battery of the ninth embodiment, the electrode plate of the negative electrode E53 may include a first lamination tape 651 and a second lamination tape 652 attached to a start portion of a winding direction. The first lamination tape 651 may be attached to a first active material layer 121 and may extend from an end portion of the first active material layer 121. The second lamination tape 652 may be attached to a second active material layer 122 and may extend from an end portion of the second active material layer 122. The extensions of the first and second lamination tapes 651 and 652 may include second extension attachment portions 943 that are attached to each other. The second extension attachment portions 943 of the first and second lamination tapes 651 and 652 attached to the first and second active material layers 121 and 122 may prevent a short circuit due to deformation of the electrode substrates 430 and 440 of the negative electrode E53 and the positive electrode E44.

The first lamination tape 651 may form a first attachment portion (or an outer layer portion) disposed on the first active material layer 121 at a winding central portion of the electrode assembly 4. The second lamination tape 652 may form a second attachment portion (or an inner layer portion) disposed on the second active material layer 122.

An end of the first attachment portion of the first lamination tape 651 on the first active material layer 121 and an end of the second attachment portion of the second lamination tape 652 on the second active material layer 122 may be spaced apart from each other in the winding direction. The first attachment portion may be shorter than the second attachment portion by a twelfth length L12. The twelfth length L12 may minimize a thickness difference in a winding diameter direction due to the first and second lamination tapes 651 and 652 such that, after the winding, the twelfth length L12 prevents a crack from occurring in the first and second active material layers 121 and 122 of the electrode assembly 4.

In some embodiments, the second extension attachment portion 943 may be disposed at an opposite side in a diameter direction of the electrode assembly 4 to partially correspond to the twelfth length L12. Thus, the second extension attachment portion 943 may further prevent occurrence of the crack due to the thickness difference.

Embodiments are set out in the following clauses:
Clause 1. An electrode assembly of a rechargeable battery that is formed by winding electrode plates of a positive electrode and a negative electrode provided on both surfaces of a separator, comprising:
   each of the electrode plates,
   wherein the electrode plate includes an electrode substrate, a first active material layer formed on a first surface of the electrode substrate, a second active material layer formed on a second surface of the electrode substrate, a first lamination tape attached to an end portion of the first active material layer, and a second lamination tape attached to an end portion of the second active material layer, and the first lamination tape and the second lamination tape include a protruding portion that protrudes more than a cross-section of the electrode substrate.
Clause 2. The electrode assembly as claimed in clause 1, wherein each of the first lamination tape and the second lamination tape further include first non-adhesive portions separated from each other outside cross-sections of the first active material layer and the second active material layer.
Clause 3. The electrode assembly as claimed in clause 2, wherein the first non-adhesive portion is cut by a knife to be formed at different electrode plates.
Clause 4. The electrode assembly as claimed in any one of clauses 1 to 3, wherein the electrode substrate, the first active material layer, and the second active material layer form a cross-section at the same position.
Clause 5. The electrode assembly as claimed in any one of clauses 1 to 4, wherein a first adhesive layer of the first lamination tape and a second adhesive layer of the second lamination tape form a main adhesive portion above the first active material layer and the second active material layer, and further form an outer adhesive portion outside the cross-sections of the first active material layer and the second active material layer to be attached to each other.
Clause 6. The electrode assembly as claimed in any one of clauses 1 to 5, wherein the first lamination tape and the second lamination tape form the first non-adhesive portions separated from each other outside the outer adhesive portion.
Clause 7. The electrode assembly as claimed in any one of clauses 1 to 6, wherein the first lamination tape and the second lamination tape form second non-adhesive portions separated from each other above the first active material layer and the second active material layer.
Clause 8. The electrode assembly as claimed in any one of clauses 1 to 7, wherein the electrode substrate forms a cross-section farther than the first active material layer and the second active material layer.
Clause 9. The electrode assembly as claimed in any one of clauses 1 to 8, wherein the first active material layer is formed on the first surface of the electrode substrate, the second active material layer is formed on the second surface of the electrode substrate, a first cross-section of the first active material layer and a second cross-section of the second active material layer are disposed at positions that are misaligned, the first lamination tape is attached to the first surface of the electrode substrate by a first adhesive layer, and the second lamination tape is attached to the second surface of the electrode substrate by a second adhesive layer.
Clause 10. The electrode assembly as claimed in any one of clauses 1 to 9, wherein the first lamination tape and the second lamination tape further include third non-adhesive portions separated from each other outside a cross-section of the electrode substrate.
Clause 11. The electrode assembly as claimed in any one of clauses 1 to 10, wherein the first lamination tape and the second lamination tape form fourth non-adhesive portions separated from each other on the first active material layer and the second active material layer.

While this disclosure has been described in connection with what is presently considered to be practical embodiments, it is to be understood that the disclosure is not limited to the disclosed embodiments. On the contrary, the disclosure is intended to cover various modifications and equivalent arrangements included within the scope of the appended claims.

### <Description of symbols>

| | | | |
|---|---|---|---|
| 10, 12: | electrode substrate | 11: | uncoated portion |
| 21, 23: | first active material layer | | |
| 22, 24: | second active material layer | | |
| 40: | lamination tape | 41: | first lamination tape |
| 42: | second lamination tape | 43; 412, 422: | protruding portion |
| 44: | first non-adhesive portion | | |
| 46; 612, 622: | second non-adhesive portion | | |
| 50: | knife | 61, 71: | first lamination tape |
| 62, 72: | second lamination tape | 411: | first adhesive layer |
| 421: | second adhesive layer | 451: | main adhesive portion |
| 452: | outer adhesive portion | 711: | first adhesive layer |
| 721: | second adhesive layer | 74; 712, 722: | third non-adhesive portion |
| 752: | adhesive portion | 76; 713, 723: | fourth non-adhesive portion |
| E, E2, E3: | electrode plate | S: | separator |
| T: | tab | | |

## Claims

1. An electrode assembly for a rechargeable battery, the electrode assembly comprising:
a positive electrode plate;
a negative electrode plate; and
a separator positioned between the positive electrode plate and the negative electrode plate,
wherein the positive electrode plate, the negative electrode plate, and the separator are formed as a wound structure, and wherein each of the positive electrode plate and the negative electrode plate comprises:
an electrode substrate,
a first active material layer formed on a first surface of the electrode substrate,
a second active material layer formed on a second surface of the electrode substrate,
a first lamination tape attached to an end portion of the first active material layer, the first lamination tape including a portion protruding beyond an end of the electrode substrate, and
a second lamination tape attached to an end portion of the second active material layer, the second lamination tape including a portion protruding beyond the end of the electrode substrate.

2. The electrode assembly as claimed in claim 1, wherein the first lamination tape includes a first non-adhesive portion and the second lamination tape includes a second non-adhesive portion, and the first non-adhesive portion and the second non-adhesive portion are separated from each other outside cross-sections of the first active material layer and the second active material layer.

3. The electrode assembly as claimed in claim 2, wherein the first non-adhesive portion is cut by a knife in a process that forms two electrode plates.

4. The electrode assembly as claimed in any one of the preceding claims, wherein the electrode substrate, the first active material layer, and the second active material layer form a cross-section for the positive electrode plate and the negative electrode plate.

5. The electrode assembly as claimed in any one of the preceding claims, wherein a first adhesive layer of the first lamination tape and a second adhesive layer of the second lamination tape form a main adhesive portion above the first active material layer and below the second active material layer, the first adhesive layer and the second adhesive layer form an outer adhesive portion beyond the first active material layer and the second active material layer, and the first adhesive layer and the second adhesive layer are attached to each other in the outer adhesive portion.

6. The electrode assembly as claimed in claim 5, wherein the first lamination tape and the second lamination tape form non-adhesive portions that are separated from each other beyond the outer adhesive portion.

7. The electrode assembly as claimed in any one of the preceding claims, wherein the first lamination tape and the second lamination tape form non-adhesive portions that are separated from each other above the first active material layer and below the second active material layer.

8. The electrode assembly as claimed in any one of the preceding claims, wherein the electrode substrate extends farther than the first active material layer and the second active material layer.

9. The electrode assembly as claimed in any one of the preceding claims, wherein a first cross-section of the first active material layer and a second cross-section of the second active material layer are disposed at positions that are not aligned, and
wherein the first lamination tape is attached to the first surface of the electrode substrate by a first adhesive layer, and the second lamination tape is attached to the second surface of the electrode substrate by a second adhesive layer.

10. The electrode assembly as claimed in any one of the preceding claims, wherein the first lamination tape and the second lamination tape further include non-adhesive portions that are separated from each other outside a cross-section of the electrode substrate.

11. The electrode assembly as claimed in any one of the preceding claims, wherein the first lamination tape and the second lamination tape form non-adhesive portions that are separated from each other with the first active material layer and the second active material layer therebetween.
